# EUROPEAN PATENT APPLICATION

(11) **EP 1 167 248 A1**
(43) Date of publication of application: **02.01.2002**
(21) Application number: 01202180.4
(22) Date of filing: 07.06.2001
(51) Int. Cl.: B65G 17/34

(54) **Conveyor**

(30) Priority: 13.06.2000 NL 1015417
(71) Applicant: VANDERLANDE INDUSTRIES NEDERLAND B.V., NL-5466 RB Veghel (NL)
(72) Inventor: Hulst, Hubertus Theodorus Petrus, Den Bosch (NL); Van der Meulen, Ivo Johannes, Den Bosch (NL); Verhees, Godefridus Franciscus Johanna Maria, Luyksgestel (NL); Van der Goor, Jacobus Marie, Nuenen (NL)
(74) Representative: Dohmen, Johannes Maria Gerardus

(57) **Abstract**

The invention relates to a conveyor comprising a driving element and a frame which is coupled with said driving element, which frame supports a conveying element which is movable in a direction transversely to the direction in which the frame can be moved by means of the driving element. Arrangements have been made to limit undesirable movement in at least one direction of an object supported on the conveying element.

## Description

The invention relates to a conveyor comprising a driving element and a number of frames coupled with said driving element, which each support an endless conveying element, wherein an endless conveying element is movable with respect to the associated frame in a direction transversely to the direction in which the frames can be moved by means of the driving element, and wherein a carrying element is provided for accommodating at least one object to be conveyed by means of the conveying element, whilst upwardly extending boundary members disposed near the upper part of the endless conveying element are provided near the sides of the carrying element, which boundary members extend substantially parallel to the direction in which the conveying element is movable with respect to the associated frame.

Such a conveyor is known from FR-A-2,546,858. The conveying element of this known conveyor consists of an endless belt, the upper part of which forms the carrying element for supporting the objects to be conveyed by means of the conveyor.

A problem that occurs with such a conveyor is that cylindrical objects, spherical objects, small objects and the like are difficult to handle with such a conveyor, since there is a danger of objects supported on the carrying element moving uncontrollably over said carrying element during operation of the conveyor, whereby they may fall off the carrying element in an undesirable manner and/or at undesirable places. In addition to that there is the risk that when objects are to be discharged from the carrying element, for example during sorting operations of the conveyor, movement of the endless conveying element will not lead to the desired result and the object in question will remain behind on the carrying element while rolling thereon.

According to the invention, at least two further, spaced-apart boundary members are connected with the conveying element, which boundary members extend transversely to the aforementioned boundary members, all this in such a manner that said boundary members prevent undesirable movement of an object present on the carrying element.

By using the construction according to the invention, a conveyor is obtained wherein objects to be conveyed can be placed onto the carrying element within a space enclosed by four boundary members, so that objects to be conveyed are prevented from making such uncontrolled movements that they may move off the carrying element in an undesirable manner.

It is noted that from FR-A-2,475,015 there is known a conveyor comprising a carrying element formed by a reciprocating belt. A partition extending transversely to the direction of movement of the belt is fixed to the belt, whilst a partition is also provided near one side of the belt. The carrying element of said conveyor does not have a space enclosed all around for accommodating an object present thereon, so that undesirable movements of an object supported on the carrying element are possible with said conveyor as well.

From FR-A-1,542,285 there has furthermore been known for over thirty years a conveyor belt comprising upright edges, whilst connecting elements are provided between said upright edges in order to prevent said side edges from moving apart.

The aforesaid publications do not provide any indication with regard to the construction of a conveyor according to the present invention, however.

The invention will now be explained in more detail with reference to the accompanying drawings.

Figure 1 is a schematic, perspective view of a part of a conveyor as known from European patent application no. 0 393 773.

Figures 2 - 14 schematically show various possible embodiments of a conveying element to be used in a conveyor according to the invention.

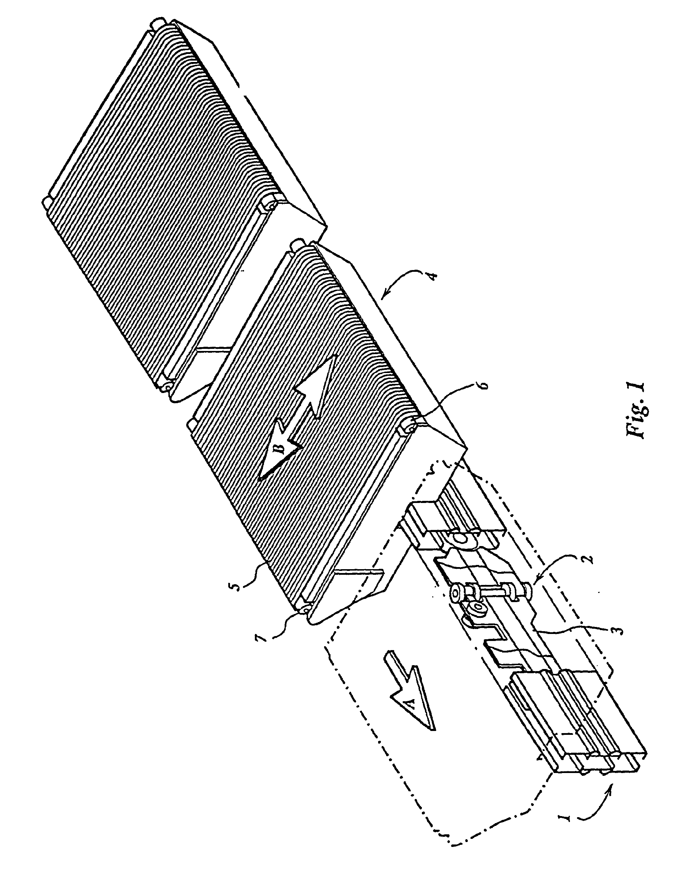

Figure 1 schematically shows a possible embodiment of a conveyor according to the invention, as described in more detail in European patent application no. 0 393 773. Said conveyor comprises a frame (not shown), which includes a guide rail 1 for guiding a flexible driving element 2, which is built up of pivotally interconnected links 3 in the illustrated embodiment.

Coupled with said links 3 are frames 4. Frames 4 are used for supporting conveyor elements 5, which consist of endless conveyor belts in the embodiment of Figure 1, which are passed over pulleys 6 and 7, which are mounted in bearings in frame 4.

During operation, the frames 4 that are coupled by the flexible driving element 2 can be moved together with the conveyor elements 5 supported by said frames in a direction indicated by arrow A. Conveying elements 5 can be used for transporting objects, which are placed on a conveying element 5 at a desired station, for example, and which are discharged from the conveying element at another desired station by driving the conveying element in one direction or the other, as is indicated by arrow B, whereby an object supported on the conveying element 5 is moved in a direction transversely to the direction of movement of frame 4 indicated by arrow A.

As already mentioned above, conveyors of the above-described type exhibit the problem that objects, for example cylindrical or spherical objects or small objects, can make undesirable movements with respect to the surface of a conveying element 5 supporting an object and forming a carrying element, during transport by the conveyor. As will be explained in more detail hereinafter, the present invention provides solutions for this problem.

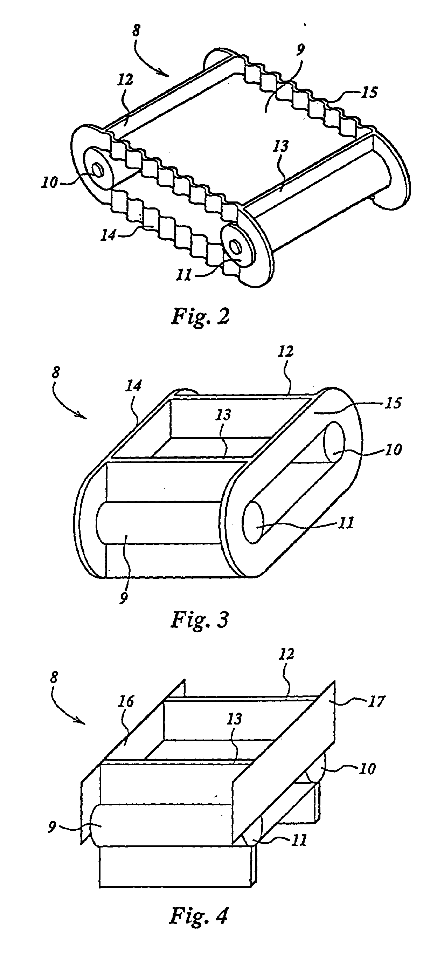

Thus Figure 2 schematically shows a conveying element 8 comprising an endless belt 9 which is passed over two pulleys 10 and 11, which will be mounted in bearings in a frame (not shown) in a similar manner as the above-described pulleys 6 and 7.

In Figure 2, two partitions 12 and 13, which extend upwards from the upper part of the endless conveyor belt 9, are fixed to said upper part near the ends thereof, in such a manner that said partitions extends at least substantially parallel to the axes of rotation of pulleys 10 and 11. In a similar manner, further partitions may be fixed to the lower part (not shown) of the conveyor belt 9.

Furthermore, upright, pleated edges 14 and 15 are fixed to the two opposed longitudinal edges of endless belt 9, which edges each extend along the entire longitudinal edge in question of the endless belt 9, as will be apparent from the figure. Upright edges 14 and 15 will preferably be made of a slightly elastic material.

An object to be conveyed by means of conveying element 8 in the above-described manner can be placed into the space bounded by partitions 12 and 13 and the parts of upright edges 14 and 15 extending between said partitions that is present on the upper part of the conveyor belt 9 that forms a carrying element,. An object that is present in said space can still move to a limited extent within said space, but it will be apparent that such movements will be limited by the presence of partitions 12 and 13 and upright edges 14 and 15, so that such an object cannot unintentionally fall off the conveying element 8.

As a result of the pleated construction of the upright edges 14 and 15, no problems will arise when said upright edges are being passed over pulleys 10 and 11.

The embodiments that are shown in Figures 3 and 4 substantially correspond to the embodiment according to Figure 2, and consequently parts shown in Figures 3 and 4 that correspond to parts shown in Figure 2 are indicated by the same numerals as in Figure 2.

In the embodiment according to Figure 3, upright edges 14 and 15 are made of an elastic material, so that it is not necessary for the upright edges to be pleated in this embodiment, since the use of a suitable flexible material enables the upright edges 14 and 15 to move over pulleys 10 and 11 without any difficulty. One advantage is that the spaces for accommodating objects are bounded by smooth walls.

Figure 4 shows an embodiment wherein the longitudinal edges of conveyor belt 9 do not have upright edges fixed thereto. Instead, partitions 16 and 17 extending in the longitudinal direction of the conveyor belt are fixed to the frame (not shown in Figure 4) supporting pulleys 10 and 11, between which partitions the partitions 12 and 13 that extend upwards from the upper part of conveyor belt 9 move during operation. It will be apparent that also in this embodiment the partitions 12 and 13, in co-operation with partitions 16 and 17, limit any movements of an object that is present on conveyor belt 9, whilst this object can be discharged in a desirable manner again by driving the conveyor belt 9 in the manner described above with reference to conveyor belt 5. The conveyor belt 9 to be used in this embodiment can be of simpler construction than in the embodiments according to Figures 2 and 3.

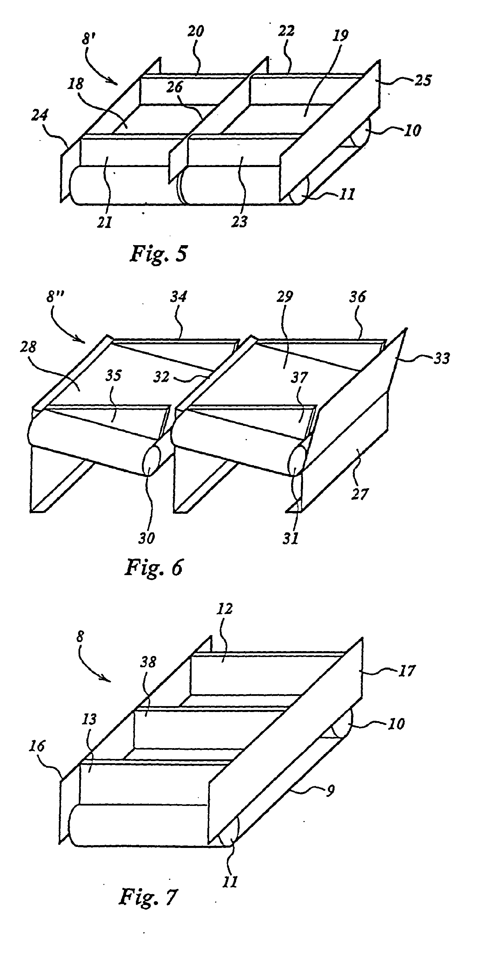

Figure 5 shows an embodiment of a conveying mechanism 8' wherein two conveyor belts 18 and 19 disposed one beside another are passed over the pulleys 10 and 11 that are supported in a frame. Also in this embodiment, each of said conveying elements or conveyor belts 18 and 19 includes partitions 20, 21 and 22, 23 corresponding to the above-described partitions 12 and 13, respectively. Partitions 24 and 25 corresponding to the above-described partitions 16 and 17 are disposed near the longitudinal edges of the conveyor belts 18 and 19 that face away from each other, which partitions 24 and 26 are fixed to the frame (not shown) that supports pulleys 10 and 11. Disposed between said partitions, near the facing longitudinal edges of conveyor belts 18 and 19, is a partition 26 which extends parallel to partitions 24 and 25 and which is fixed to the frame, in such a manner that the facing ends of the partitions 20 and 21 fixed to conveyor belt 18 and of the partitions 22 and 23 fixed to conveyor belt 19 move past said partition 26 during operation. In this embodiment the conveying mechanism 8' therefore comprises two separate spaces, into each of which an object can be placed, on the carrying elements formed by the upper parts of the conveying elements 18 and 19, wherein any movements of objects accommodated in said spaces are limited by said partitions.

It will be apparent that a similar construction can be obtained when using a single conveyor belt, to which the upright partitions 20 - 23 are fixed in an identical manner as shown for the two separate conveyor belts 18 and 19, and whereby said conveyor belt can move under partition 26.

In the embodiment comprising two conveyor belts 18 and 19 supported by a frame, the construction may be such that the two conveyor belts 18 and 19 can be driven independently of each other.

Figure 6 shows an embodiment of a conveying mechanism 8", wherein a frame 27 (schematically illustrated) supports two parallel, endless conveying elements or conveyor belts 28 and 29. Said conveyor belts 28 and 29 are thereby supported by pulleys 30 and 31, respectively, whose axes of rotation include an angle with the horizontal. It will be apparent that objects present on the upper parts of conveyor belts 28 and 29 will tend to move to the right, seen in Figure 6. Such movement is limited by partitions 32 and 33, respectively, which are fixed to the frame 27 and which extend along the lowermost longitudinal edges of the upper parts of conveyor belts 28 and 29 and upwards from said upper parts. Also in this embodiment it is possible, of course, to use edges that join the respective lowermost longitudinal edges of the conveyor belts as used in the embodiments of Figures 2 and 3 instead of partitions 32 and 33 that are fixedly connected to the frame.

Furthermore, partitions 34, 35 and 36, 37 corresponding to the above-described partitions 12 and 13, respectively, are fixed to conveyor belts 28 and 29, which partitions are triangular in shape in the embodiment that is shown in Figure 6, such that the height of such a partition gradually increases from the highest longitudinal edge of a conveyor belt towards the lowermost longitudinal edge of said conveyor belt.

Also in this case there is no danger that an object that has been introduced into the space which is bounded by partitions 32, 34 and 35 or by partitions 33, 36 and 37 and which is supported on a carrying element formed by an upper part of belt 28 or 29 will fall from the space in question during operation.

Figure 7 shows an embodiment which in the main corresponds to the embodiment according to Figure 4. Consequently, like parts are numbered alike in the two figures 4 and 7. In the embodiment that is shown in Figure 7, another partition 38 extending parallel to partitions 12 and 13 is provided between the two partitions 12 and 13 that are disposed near the ends of, for example, an upper part of conveyor belt 9. As a result, two separate spaces are formed on the upper part of conveyor belt 9, into each of which an object can be introduced, which may or may not take place at the same station, whereby said objects can be discharged simultaneously at a discharge station or be discharged one by one at different, spaced-apart discharge stations.

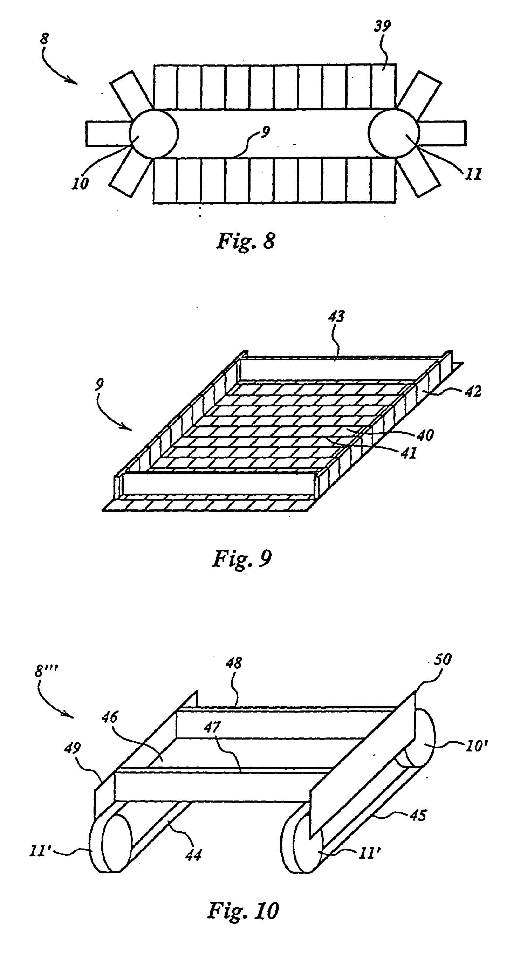

Figure 8 shows an embodiment of a conveying element 8 which substantially corresponds to the embodiment that has been described above with reference to Figures 2 and 3. In this embodiment, however, ears 39 which are rectangular or trapezoidal in shape, for example, are fixed to the longitudinal edges of conveyor belt 9 instead of the one-piece boundary edges 14 and 15, in such a manner that said ears abut against each other or overlap with their edges near the straight upper part and the straight lower part of the conveyor belt 9, thus forming a substantially closed wall, whilst they initially move away from each other and subsequently towards each other again upon passing over pulleys 10 and 11. The projecting ears 39 may be made of a strong, non-elastic material, whilst they can nevertheless be passed over the pulleys without any difficulty.

In the embodiment that is shown in Figure 9, the endless conveyor belt 9 (shown in part) is built up of a large number of parts or links 40 extending parallel to the axes of rotation of the pulleys (not shown), which parts or links 40 are pivotable relative to each other about pivots 41 extending parallel to the axes of rotation of the pulleys. Fixed to the ends of said links are upwardly extending ears 42. Furthermore a few spaced-apart links 40 are provided with partitions 43 extending between the upwardly extending ends or ears 42 of the links in question, so that also in this embodiment a space suitable for accommodating an object is formed by means of partitions 43 and the upright ears 42 disposed between said partitions 43, in such a manner that an object present in said space is only capable of limited movement within said space.

Figure 10 shows an embodiment of a conveying element 8"' to be supported on a frame (not shown), which conveying element comprises two parallel belts 44 and 45, which are passed over pulleys 10' and 11' corresponding to the above-described pulleys 10 and 11. A canvas 46 forming a carrying element is stretched between the two belts 44 and 45, to the ends of which belts partitions 47and 48 extending transversely to the longitudinal direction of the belts are fixed.

Furthermore, partitions 49 and 50 extending parallel to said upper parts of belts 44 and 45 and projecting above said belts are disposed near the upper parts of said belts 44 and 45, which partitions are fixed to the frame (not shown) that supports conveying element 8"'.

It will be apparent that in the illustrated arrangement an object supported on the carrying element or canvas 46 of conveying element 8"' is present in a space that is bounded by partitions 47 - 50, so that also in this embodiment the movements of an object supported on the conveying element are limited by the partitions in question. When the object is to be discharged, belts 44 and 45 will be driven, so that canvas 46 and the partitions 47 and 48 fixed thereto will be moved to a position in which an object present on the canvas can be discharged.

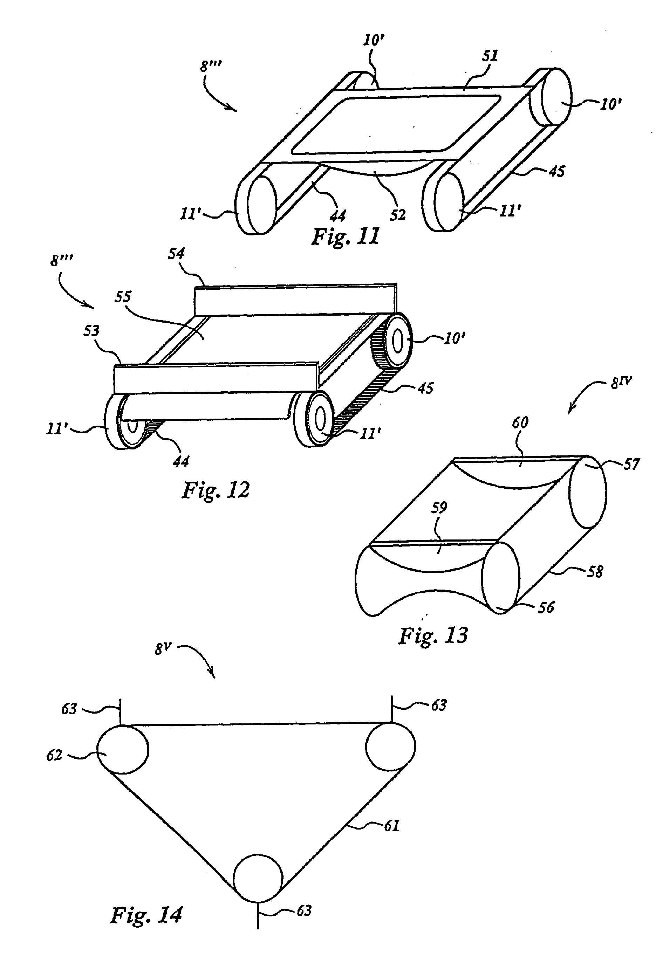

Figure 11 shows an embodiment of a conveying element 8"' wherein the belts 44 and 45 as described above with reference to Figure 10 are used again. A frame-like carrier 51 of a flexible material is provided between said belts. A bag-like receiving element 52 of a flexible material is fixed to the rectangular inner edge of said frame-like carrier. It will be apparent that in the position of said conveying element 8"' that is shown in Figure 11, an object can be accommodated in said bag-like element 52. The parts of the bag-like element 52 that extend upwards from the lower part of the bag-like element 52 that forms a carrying element form boundary members extending transversely and parallel respectively to the direction of movement of conveying element 8", which boundary members limit the movements of the object present in said bag-like element 52 relative to the conveying element 8''' to such an extent that said object cannot fall off conveying element 8"' upon movement thereof. When the object is to be removed from said bag-like element 52, belts 44 and 45 can be driven again, as a result of which said bag-like element can be moved to a position wherein the object can move out of said bag-like element.

In the embodiment according to Figure 12, use is made again of a conveying element 8"' which includes two spaced-apart, endless belts 44 and 45, as described above with reference to Figure 10. Spaced-apart partitions 53 and 54 extending parallel to the axes of rotation of pulleys 10', 11' are fixed to said belts 44 and 45. In the position that is shown in Figure 12, said partitions extend upwards from the upper parts of the belts 44 and 45, from the upper side of a plate 55 forming a carrying element, which is disposed at the same level as the upper parts of belts 44 and 45. Said plate 55, which forms a carrying element for an object, is fixedly connected to the frame of the conveying element.

In the illustrated position of partitions 53 and 54, movement of an object that is present on plate 55 is limited at least in a direction perpendicularly to the axes of rotation of pulleys 10', 11'. Such an arrangement will be satisfactory, for example, when the conveying element 8"' is used for transporting bars or rolls which are placed on plate 55 with their longitudinal axes extending parallel to the axes of rotation of pulleys 10', 11'. It will be apparent that it is also possible, however, to fit upright partitions near belts 44 and 45, as is indicated for partitions 49 and 50 in Figure 10. Furthermore it is possible to provide edges that move along with the belts, along the lines of the embodiments according to Figures 2 and 3.

Driving the belts 44 and 45 makes it possible to move an object that is supported on plate 55 off said plate by means of partition 53 or by means of partition 54, depending on the direction in which the belts are being driven.

As is furthermore shown in Figure 12, it is preferred to use toothed belts so as to ensure that the belts will move synchronously upon being driven.

The conveying mechanism 8^{IV} that is schematically shown in Figure 13 comprises two spaced-apart diabolo-shaped pulleys 56 and 57, over which a conveying element in the form of an endless conveyor belt 58 is passed. Pulleys 56 and 57 will be mounted in a frame which is coupled with a driving element, in a similar manner as described above with reference to pulleys 10 and 11.

As a result of the diabolo shape of the pulleys 56 and 57, both the upper part and the lower part of conveyor belt 58 will assume a gutter shape. Furthermore, partitions 59 and 60 extending parallel to the axes of rotation of pulleys 56 and 57 are fixed to conveyor belt 58 in a similar manner as described above. The lower portion of the upper part of the conveyor belt 58 forms the carrying element for an object to be received, and the upwardly sloping portions of the upper part of the conveyor belt 58 form upwardly extending boundary members, as it were. It will be apparent that also in this embodiment the movements of an object supported on the conveyor belt 58 between partitions 59 and 60 will be limited to such an extent that such an object will be prevented from falling off the conveyor belt undesirably.

Figure 14 furthermore schematically shows an embodiment of a conveying element 8^{V} which consists of an endless conveyor belt 61, which is passed over three pulleys 62 being supported in a frame, whose axes of rotation are located in the corner points of an equilateral triangle. Three partitions 63 extending parallel to the axes of rotation of the pulleys are fixed to the conveyor belt 61 in equally spaced-apart relationship. Also this conveying element 8^{V} may include partitions extending near the longitudinal edges of the upper part, which are fixed to the frame of the conveying element. Furthermore it is possible to fit the conveyor belt with upright edges like the ones that are used in the embodiment according to Figures 2 or 3, for example.

If an object which is present on the upper part of the conveyor belt forming a carrying element is to be discharged, the conveyor belt can be moved along one third of its length, whereby an adjoining part of the conveyor belt will in turn form the upper part of the conveyor belt in the position that is shown in Figure 14.

## Claims

1. A conveyor comprising a driving element and a number of frames coupled with said driving element, which each support an endless conveying element, wherein an endless conveying element is movable with respect to the associated frame in a direction transversely to the direction in which the frames can be moved by means of the driving element, and wherein a carrying element is provided for accommodating at least one object to be conveyed by means of the conveying element, whilst upwardly extending boundary members disposed near the upper part of the endless conveying element are provided near the sides of the carrying element, which boundary members extend substantially parallel to the direction in which the conveying element is movable with respect to the associated frame, **characterized in that** at least two further, spaced-apart boundary members are connected with the conveying element, which boundary members extend transversely to the aforementioned boundary members, all this in such a manner that said boundary members prevent undesirable movement of an object present on the carrying element.

2. A conveyor according to claim 1, **characterized in that** said conveying element is passed over pulley means supported by the frame so as to be moved in a direction transversely to the direction in which the frame can be moved, whilst at least two partitions are fixed to said endless conveying element, which partitions extend transversely to the intended direction of movement of said conveying element.

3. A conveyor according to claim 2, **characterized in that** said conveying element comprises an endless belt or the like.

4. A conveyor according to claim 2, **characterized in that** two endless conveying elements extending parallel to each other are mounted in a frame.

5. A conveyor according to claim 2 or 3, **characterized in that** said conveying element consists of a conveyor belt, which forms the carrying element for the objects.

6. A conveyor according to claim 2 or 3, **characterized in that** said conveying element is made up of two spaced-apart belts, between which a carrying element is provided.

7. A conveyor according to any one of the preceding claims 2-6, **characterized in that** the boundary members disposed near the sides of said carrying element are made up of projecting edges connected to said endless conveying element.

8. A conveyor according to claim 7, **characterized in that** an upright edge is made of an elastic material.

9. A conveyor according to claim 7 or 8, **characterized in that** an upright edge is pleated.

10. A conveyor according to claim 7, **characterized in that** an upright edge is built up of a plurality of projecting ears.

11. A conveyor according to any one of the preceding claims 1-6, **characterized in that** the boundary members disposed near the sides of the conveying element are made up of a partitions which are fixed to the frame.

12. A conveyor according to any one of the preceding claims, **characterized in that** an endless conveying element is supported in such a manner that, seen in the direction of movement of the conveying element, one side of the upper part of said conveying element is disposed at a lower level than the other side of said conveying element.

13. A conveyor according to any one of the preceding claims, **characterized in that** said conveying element comprises two spaced-apart belts, to which a frame-like element is fixed, which supports a bag-like element disposed between said belts.

14. A conveyor according to any one of the preceding claims 1-12, **characterized in that** said endless conveying element is made up of two spaced-apart belts, to which at least two partitions extending transversely to the longitudinal direction of said belts are fixed, whilst a plate forming a carrying element, which extends near the upper parts of the belts, is mounted in the frame, in such a manner that said partitions can move over said plate.

15. A conveyor according to any one of the preceding claims 1-12, **characterized in that** said endless conveying element is made up of a conveyor belt which is passed over pulleys having a diabolo shape.

16. A conveyor according to any one of the preceding claims 1-12, **characterized in that** said endless conveying element is passed over three pulleys located in the corner points of an equilateral triangle, and **in that** three equally spaced partitions are fixed to said endless element.
